# EUROPEAN PATENT SPECIFICATION

(11) **EP 4 516 669 B1**
(45) Date of publication and mention of the grant of the patent: **10.12.2025**
(21) Application number: 23193753.3
(22) Date of filing: 28.08.2023
(51) Int. Cl.: B64D 9/00

(54) **COMPONENT HOLD AND RELEASE ARRANGEMENT FOR AN AIRCRAFT AND AIRCRAFT HAVING SUCH A HOLD AND RELEASE ARRANGEMENT**
KOMPONENTENHALTE- UND -FREIGABEANORDNUNG FÜR EIN FLUGZEUG UND FLUGZEUG MIT SOLCH EINER HALTE- UND FREIGABEANORDNUNG
DISPOSITIF DE MAINTIEN ET DE LIBÉRATION DE COMPOSANT POUR UN AÉRONEF ET AÉRONEF COMPRENANT UN TEL DISPOSITIF DE MAINTIEN ET DE LIBÉRATION

(43) Date of publication of application: 05.03.2025
(73) Proprietor: Airbus Defence and Space GmbH, 82024 Taufkirchen (DE)
(72) Inventor: ZANTZ, Tanno, 82024 Taufkirchen (DE)
(74) Representative: LKGLOBAL Lorenz & Kopf Patentanwalt Attorney at Law PartG mbB

(56) References cited:
- DE-A1- 102008 007 421
- DE-A1- 102016 109 831
- US-A- 4 379 535
- US-A1- 2019 055 020

## Description

### TECHNICAL FIELD

The disclosure relates to hold and release mechanisms for aircrafts, such as those used for aerial delivery of components. The disclosure further relates to aircrafts having such hold and release mechanisms.

### TECHNICAL BACKGROUND

In aerial delivery operations, oftentimes components have to be delivered by air transport using transport aircrafts by performing an air dropping operation. For this, the component is brought to a respective drop zone where the air dropping maneuver may be performed by letting the component reach the ground of the drop zone via a parachute. The respective component is first loaded into a compartment of the aircraft which is accessible from a rear hatch. During flight, the component is secured in the compartment by holding devices which are often referred to as holding mechanisms and which are using claws or latches in order to fix the component onto the floor of the compartment. For this purpose, the component may for example be placed on a carrier system like a pallet, such as a standardized pallet, which is fixed to the floor. Once the aircraft has reached the drop zone, a rear hatch is opened, and a parachute fixed to the component is unfolded and pulls on the component with a dedicated force. The holding system is designed to open the latches when a certain force threshold is reached, enabling the component to leave the compartment and to glide to the ground on the parachute.

In general, the whole operation has to be finished very quickly. Therefore, the holding mechanisms need to open fast once the force threshold is reached. Also, in order to allow the component to uniformly leave the compartment, all holding mechanisms on the pallet (e.g., four holding mechanisms) need to open simultaneously.

US 2019 / 0 055 020 A1 describes an air delivery lock for a cargo located in an aircraft. The Air delivery lock includes a housing, a restraining device having an engagement end for contacting and restraining the cargo, and a force reaction end, a bell crank having a bell crank joint for swivably mounting the bell crank, an elastically deformable force introduction unit, and a latching unit. The restraining device is swivably mounted on a leg of the bell crank around a restraining device axis. The force introduction unit is attached to a second leg of the bell crank and the force reaction end of the restraining device. A first guide attached to the housing and a second guide attached to the restraining device prevent rotation of the bell crank until a predetermined release force is reached on the engagement end of the restraining device.

DE 10 2008 007 421 A1 describes a locking device for fixing a piece of cargo in the cargo hold of an aircraft. The locking device has a locking element which engages with the cargo item, in particular in a fixing recess, to fix it in place. The locking element can be adjusted between a locking position, in which the locking element engages in a fixing manner, and a non-engaging position, in which the locking element does not engage. The locking element is biased in the locking position by a mechanical biasing device. If a defined load threshold with which the locking element is loaded is exceeded, the locking device is automatically triggered and the locking element automatically moves to the non-engaged position. The locking element is moveable along a first adjustment path section between the locking position and a release position and then along a second adjustment path section between the release position and the non-engaged position. The locking element engages with the cargo item along the first adjustment path section in a fixing manner. The locking element is disengaged along the second adjustment path section. The biasing device applies a fixing force along the first adjustment path section up to the release position with an essentially constant force curve corresponding to the load threshold.

US 4 379 535 A describes a pallet restraint system for use in the cargo bay of an aircraft in an air drop sequence. The system assures an equal application of the parachute extraction force and simultaneous release of all load sensitive latches by means of hydraulic interconnectors between the latches to vary their position.

DE 10 2016 109 831 A1 describes a device for holding and releasing a load in or from a vehicle. The device comprises a holding element that can be selectively set in a retracted state or an extended state, a reference element and a first mechanical coupling unit which can be selectively placed in a released state or in a coupled state and which is arranged to mechanically couple the retaining element releasably to the reference element so that the retaining element is not movable with respect to the reference element when the first mechanical coupling unit is in the coupled state. The device further comprises a load detection unit arranged to detect a load applied to the reference element and a control unit operatively connected to the first mechanical coupling unit and the load detection unit and adapted to move the first mechanical coupling unit from the coupled state to the uncoupled state when the force detected by the load detection unit reaches a predetermined limit value.

### DESCRIPTION

It is an objective to provide fast and even release of components delivered by an air dropping maneuver. It is a further objective to allow for easy and fast adaption of a release system to different environmental conditions.

These objectives are solved by the subject matter of independent claim 1. **Further** embodiments are described in the dependent claims as well as in the following description. According to a first aspect, a component hold and release arrangement for an aircraft is provided. The component hold and release arrangement comprises a controller and a first holding mechanism. The first holding mechanism comprises a first latch, a first passive holding device and a release threshold adjustment device. The first passive holding device is connected to the first latch and configured to prevent movement of the first latch when a force exerted onto the first latch is smaller than a first release threshold. The first passive holding device is configured to release the first latch when the force exerted onto the first latch reaches the first release threshold. The release threshold adjustment device is functionally coupled to the first passive holding device and adapted to adjust the first release threshold. The controller is in communication with the release threshold adjustment device and configured to communicate a corresponding adjustment value to the release threshold adjustment device so as to adjust the first release threshold. The first passive holding device is one of the following: a disc spring torque limiter configured to allow movement of a rotating shaft when a release torque is reached, or a force limiter configured to prevent linear movement of a sliding shaft when the force limiter is in a secured state and to allow linear movement of the sliding shaft when a release force is reached.

The component hold and release arrangement generally is configured to hold a component in a compartment and to release the component once a dedicated force pulls on it. This force may for example result from a parachute pulling on the component. The first latch thereby holds the component on the floor of the compartment and may for example be a claw, a hook or any other structure that can be rotated or shifted into a respective recess, e.g., of a pallet onto which the component is placed. Thereby, the first latch may be rotatable around a rotational axis and holds the component when rotated into the respective recess, so that the component cannot be moved with respect to the floor of the compartment. When the first latch is opened or released, however, the component can be moved with respect to the floor.

The first passive holding device may, for example, be a torque limiter or a force limiter, which allows rotational movement (e.g., of a rotational axis of the torque limiter) or linear movement (e.g., of a sliding shaft), once a certain torque or force is reached, as described further below with respect to certain embodiments. However, any other passive holding device which prevents movement below a certain threshold (e.g., a threshold of torque or force) and allows movement when the threshold is reached may also be used. Since the first passive holding device is (mechanically) connected to the first latch, the first latch can only be moved, when the threshold of the first passive holding device is reached or exceeded. The first passive holding device may be connected to the first latch by any suitable means, such as by a suitable gear set.

**In** other words, the first passive holding device prevents the first latch from rotating or shifting from the latched position, where the first latch is engaged with the recess, into the unlatched position, where the first latch is not engaged with the recess of the component, when a force acting onto the first latch is smaller than the first release threshold. The first release threshold thereby is defined with relation to the force acting onto the first latch itself, which is also indirectly acting onto the first passive holding device connected to the first latch. This force is either acting onto the first passive holding device in the form of a torque (e.g., for torque limiters) or as a force (e.g., for force limiters), and these quantities are proportional to the force acting onto the first latch itself. Therefore, choosing a first passive holding device having a distinct torque or force threshold provides for a corresponding release threshold.

The term "passive" means that the passive holding device is not working actively, e.g., by means of electricity or pneumatic mechanisms, but works only by employing certain mechanical effects of components within the passive holding device. It may, in particular, not be controlled by a controller (e.g., a computer), or at least not directly be controlled by a controller, but only work by means of forces resulting from the structure of the passive holding device (e.g., forces resulting from springs or other mechanical components) or acting onto the passive holding device.

The release threshold adjustment device may be any device capable of adjusting the release threshold of the first passive holding device. It may for example be an actuator device acting on an adjustment element of the first passive holding device or an active element, imposing an additional release torque or release force to the system, as will be described further below with regard to certain embodiments.

The controller may be any suitable controller device, such as a computer or control station of the aircraft, into which the component hold and release arrangement is mounted. However, the controller may also be any other device capable of receiving and sending data and instructions, and of performing calculations. The controller may, for example, also be a smartphone or other mobile handheld device. However, the controller may also be part of the release threshold adjustment device itself or of other devices of the arrangement, e.g., in form of a suitable circuit board.

Although the release threshold in general is predefined and set when loading the component, it may not be constant at all times. For example, the release threshold may vary with varying altitude of the aircraft or with other changing environmental conditions, such as temperature or pressure. In particular, the release threshold needs to be lower than the force, a parachute or other extracting device imposes onto the component and therefore onto the first latch when the component is to be dropped. In this way, the first latch releases the component when, for example, a parachute connected to the component is opened and pulls on the component, thereby enabling dropping the component over a drop zone. In order to adjust the release threshold accordingly, e.g., when the preset release threshold has changed because of changed altitude and/or environmental conditions, the controller sends a corresponding adjustment signal containing a respective adjustment value to the release threshold adjustment device. The release threshold adjustment device then adjusts the release threshold accordingly, for example by adding an additional release torque or force component to the release torque or release force of the first passive holding device. The corresponding adjustment value may, for example, be determined based on a sensor value (as described further below) or other suitable device or from a look-up table containing corresponding values for corresponding conditions.

According to an embodiment, the component hold and release arrangement further comprises a second holding mechanism. The second holding mechanism comprises a second latch and a second passive holding device. The second passive holding device is connected to the second latch and configured to prevent movement of the second latch when a force exerted onto the second latch is smaller than a second release threshold. The second passive holding device is configured to release the second latch when the force exerted onto the second latch reaches the second release threshold. The adjustment value communicated to the release threshold adjustment device effects an adjustment of the first release threshold so as to align the first release threshold and the second release threshold with each other.

The second holding mechanism may be similar or identical to the first holding mechanism. In particular, any feature described herein with regard to the first holding mechanism may be equally valid for the second holding mechanism (or any additional holding mechanism, as described below). The second holding mechanism and the first holding mechanism may, for example, both employ the same passive holding device, i.e., the first passive holding device and the second passive holding device may be identical (such as both be implemented as disc-spring torque limiter, or both be implemented as force limiter). However, the first passive holding device and the second passive holding device may also be different from each other. In particular, the second holding mechanism may be designed according to any of the embodiments described with regard to the first holding mechanism, independent of the embodiment used for the first holding mechanism.

Further, the second holding mechanism may or may not include a second release threshold adjustment device, which is configured to adjust the release threshold of the second holding mechanism. By including a second release threshold adjustment device, it is possible to adjust the release thresholds of each of the holding mechanisms independently of each other according to the respective requirements.

Also, further holding mechanisms may be included in the component hold and release arrangement, such as a third, fourth, fifth, etc. holding mechanism. Each of these holding mechanisms may be designed according to any of the embodiments described for the first holding mechanism. If more than one holding mechanism is employed, i.e., N holding mechanisms, then the corresponding single release threshold of each of the holding mechanisms needs to be lower than 1/N of the total force acting onto the component to be delivered during the dropping operation, e.g., from the parachute, to ensure that all the latches open simultaneously because the force acting onto the component is distributed over the single latches.

If using a second holding mechanism, the controller may obtain information about the first release threshold (i.e., the release threshold of the first holding mechanism) and the second release threshold (i.e., the release threshold of the second holding mechanism) and the release threshold adjustment device may set the first release threshold so as to align the first release threshold and the second release threshold, meaning the first release threshold and the second release threshold have the same release threshold value after the adjustment of the first release threshold. This ensures, that the first latch and the second latch open at the same time, allowing the component to leave the compartment in an even manner, without adding any rotating moments or other moments of movement to the component. For example, the first release threshold and the second release threshold may be set identically at the time of loading the component. However, because of environmental conditions, the first release threshold and the second release threshold may change differently when travelling to the drop zone. For example, one of the first holding mechanism and the second holding mechanism may be located closer to a rear hatch of the aircraft and therefore experience a different change in temperature, which may lead to a different change of the release threshold. The controller may then command an adjustment value to the release threshold adjustment device that effects that the first release threshold is changed in such a way that the first release threshold and the second release threshold match again.

While it is described that the first release threshold value is adjusted to correspond to the second release threshold value, it is noted that the second release threshold value may as well be adjusted to correspond to the first release threshold value. It is also conceivable that both, the first and second release threshold values, are adjusted to a same release threshold value.

If using more than two holding mechanisms, in general more than one release threshold adjustment device may be necessary. For example, when using three holding mechanisms, at least two release threshold adjustment devices may be necessary, in order to align two of the release thresholds with the remaining release threshold.

According to a further embodiment, the first holding mechanisms further comprises a release mechanism. The release mechanism prevents movement of the first latch when the release mechanism is in a secured state and allows movement of the first latch when the release mechanism is in an unsecured state.

The release mechanism may, e.g., include a motor and a motor brake which are mechanically connected with each other and to the first latch. For example, the motor may be connected to the first latch via a set of gears and a clutch. The motor may be used to bring the first latch into the latched position when loading the component. For this, the clutch is closed, and the motor is engaged. The motor brake may afterwards be closed. In this way, premature release of the first latch, e.g., by forces acting on the component during the flight to the drop zone, is prevented. When the drop zone is reached, and after the release thresholds have been adjusted or aligned as described above, the motor brake and the clutch may be opened, enabling dropping of the component as described above. However, other similar release mechanisms that provide for this functionality may also be used.

Further, if more than one holding mechanism is used, each of the holding mechanisms may include such a release mechanism. However, it is also conceivable that only one release mechanism is used for all the holding mechanisms. This single release mechanism may for example be connected to all of the latches simultaneously using a suitable gear set or similar mechanism, as will be readily apparent to one of ordinary skill in the art.

According to the invention, the first passive holding device is one of a disc spring torque limiter configured to allow movement of a rotating shaft when a release torque is reached, and a force limiter configured to prevent linear movement of a sliding shaft when the force limiter is in a secured state and to allow linear movement of the sliding shaft when a release force is reached.

A disc spring torque limiter may be any regular disc spring torque limiter. Usually, disc spring torque limiters are used to continuously transmit a torque from a hub to a flange of the torque limiter during a normal operation mode. The torque thereby is transmitted by balls or rollers held in indentations in matching halves of a carrier flange by disc springs. Once a pre-set release torque is reached, the balls or rollers are forced out of their indentations, allowing the flange sections to rotate separately.

In the described component hold and release arrangement, either the hub or the flange of the torque limiter is fixed to the first latch. The remaining element of the hub and the flange is fixed to a surrounding structure of the arrangement, such as the fuselage of an aircraft. Therefore, the first latch is held in place until a torque resulting from a force acting onto the first latch (which is transmitted to the torque limiter, e.g., by a gear set) reaches the pre-set release torque of the disc spring torque limiter. Once this condition is met, the disc spring torque limiter becomes freewheeling and allows the first latch to release or unlatch.

Usage of such a disc spring torque limiter allows for quick release of the first latch (and further latches, if applicable) in contrast to solutions currently known in the art, such as active components like tooth brakes. Tooth brakes, for example, require about 0.4 seconds to open because of the time it takes them to reduce the magnetic field. Hence, the disclosed arrangement speeds up the release operation and therefore the dropping maneuver.

The release torque of the disc spring torque limiter can in principle be set beforehand, e.g., by adjusting an adjustment element like an adjustment screw. However, the setting may change, when environmental conditions change, as described above. Therefore, a release threshold adjustment device as described above and further specified below is used, to adjust the release threshold of the holding mechanism to the desired value.

If more than one holding mechanism and therefore more than one passive holding device is used, either all or only some of the passive holding devices may be disc spring torque limiters.

Instead of a disc spring torque limiter, a linear force limiter may also be used. Such a linear force limiter is fixedly connected to a surrounding structure of the arrangement, such as the fuselage of an aircraft, on one of its ends. On the other end, a sliding shaft is connected to the first latch. The sliding shaft thereby is connected to the first latch on a position offset from the rotational axis of the first latch on a side opposite of the engaging portion of the latch with the component. When the component presses against the first latch with a dedicated force, a torque is created in the rotational axis which pushes the sliding shaft into the force limiter with a shaft force proportional to the dedicated force onto the first latch. When the shaft force reaches the release force of the force limiter, the force limiter allows the linear movement of the shaft and thereby also allows the first latch to release.

The release force of the force limiter can in principle be set beforehand, e.g., by adjusting an adjustment element like an adjustment screw. However, the setting may change, when environmental conditions change, as described above. Therefore, a release threshold adjustment device as described above and further specified below is used, to adjust the release threshold of the holding mechanism to the desired value.

Usage of such force limiters also allows for quick release of the first latch (and further latches, if applicable).

If more than one holding mechanism and therefore more than one passive holding device is used, either all or only some of the passive holding devices may be force limiters.

According to a further embodiment, the release threshold adjustment device is an active torque limiter configured to provide an additional torque component for the first passive holding device.

Such active torque limiters can add an additional release torque component, for example by electrical or pneumatic means. The active torque limiter can, for example, be coupled to the first passive holding device by a summing gear, as described further below, and thereby add an additional torque component that has to be overcome before the full system (active torque limiter and first passive holding device) releases and allows the first latch to open. Such an active torque limiter may be connected to the controller and the controller can send commands to the active torque limiter to adjust the additional torque component. In this way, a fine adjustment of the release threshold may be performed in a fast way without the need to manually change the threshold settings of the passive holding device.

It should be understood that the term "active" in "active torque limiter" does not necessarily mean that the active torque limiter does actively open or unsecure the latch, i.e., by applying a torque in the opening direction. The term "active" may also mean that the active torque limiter sets its release torque by active means, i.e., by means that are not only depending on mechanical properties of the active torque limiters, such as is the case with the disc spring torque limiter, but for example by using a magnetic holding field or the internal pressure in a gas cylinder, as will be described below. The release takes place, e.g., when the release torque is reached, just as is the case with the disc spring torque limiter.

In embodiments where more than one release threshold adjustment device is used (as described further above), either each of the release threshold adjustment devices or only some of the release threshold adjustment devices can be active torque limiters.

According to a further embodiment, the active torque limiter comprises an internal coil for adjusting the additional torque component by adjusting the current through the coil.

The current through the internal coil generates a holding torque of the active torque limiter. Once this holding torque is reached or overcome, the active torque limiter becomes freewheeling and does not prevent movement of the first latch anymore. Therefore, if the force acting onto the first latch generates an overall torque or torque/force combination on the first passive holding device and the active torque limiter that is equal to the sum of the single threshold values, the passive holding device/active torque limiter system becomes freewheeling and allows the first latch to open.

The holding torque of the active torque limiter can be easily adjusted by the controller by adjusting the current flowing through the coils of the active torque limiter. Such an adjustment may be performed automatically or in response to a user input into the controller.

The active torque limiter may also be a regular electric motor.

According to a further embodiment, the active torque limiter comprises an internal gas cylinder for adjusting the additional torque component pneumatically.

The internal gas cylinder torque limiter transfers movement from a hub to a flange until a certain torque threshold defined by a pneumatic pressure inside the torque limiter is reached or exceeded. After this point, the internal gas cylinder torque limiter becomes freewheeling and does not transfer movement anymore. The torque threshold may be adjusted by changing the internal pressure, for example by adjusting the pressure inside the internal gas cylinder torque limiter. This may, for example, be achieved by a compressor or pressure reservoir connected to the internal gas cylinder via a respective valve. Such a compressor or a valve of a pressure reservoir may be controlled by the controller to adjust the internal pressure as needed.

According to a further embodiment, the active torque limiter and the first passive holding device are connected with each other by a summing gear, such that the active torque limiter adds the additional torque component to the passive holding device via the summing gear so as to adjust the first release threshold.

Such a summing gear may for example be a ring gear of a planetary gear box or a regular toothed wheel or gear. The side of the active torque limiter and of the first passive holding device which is not fixedly connected to the surrounding structure may for example comprise a toothed shaft. If the summing gear is a ring gear, the toothed shafts of the first passive holding device and the active torque limiter may act as planetary gears that engage with the ring gear. If the summing gear is a regular gear, the toothed shafts may engage the regular gear, e.g., on the circumference, as will be readily apparent. However, a shaft of the active torque limiter and of the first passive holding device and the summing gear may build any conceivable gear set or gear box.

The force acting onto the first latch is transferred and distributed via the summing gear and possibly other intermediate gears to the active torque limiter and the first passive holding device. Therefore, the force acting onto the latch must reach or exceed the sum of the torque thresholds of the active torque limiter and the passive holding device in order to unlatch. Hence, the corresponding release threshold of the first latch may be adjusted by adjusting the torque threshold of the active torque limiter. Such an adjustment can be performed easily and fast by the controller.

According to a further embodiment, the release threshold adjustment device is an actuator device configured to adjust the first release threshold by actuating an adjustment element of the first passive holding device.

In this embodiment, the active torque limiter may be omitted. As described above, the first passive holding device may have a pre-set torque threshold upon reaching of which the torque limiter releases. This torque threshold may, e.g., be set by adjusting an adjustment element such as an adjustment screw. An actuator device may be connected to the corresponding adjustment element and to the controller, so that the controller can command a corresponding adjustment and consequently the actuator device actuates the adjustment element correspondingly.

The actuator device may be any suitable actuator device, such as a step-motor or stepless motor or any other suitable device.

According to a further embodiment, the first passive holding device comprises a force sensor configured to measure a preload force of the first passive holding device and communicate the determined force value to the controller.

For example, a disc spring torque limiter may be adjusted by adjusting a preload force of the disc spring arrangement. The corresponding preload force may be measured by the force sensor and communicated to the controller, which in turn can use the sensor data to determine a suitable adjustment value in order to set the release threshold as needed.

In particular, if more than one holding mechanism is used, the controller may compare the obtained sensor values from the different passive holding devices and may either adjust one or more active torque limiters or actuators (depending on the respective embodiment), so that the release thresholds of the different holding mechanisms are aligned with each other. Typically, the highest release threshold value is identified based on the measured preload forces of the force sensors. Then, the release threshold values of the other holding mechanisms is adjusted by increasing their release threshold values to the highest release threshold value. **In** certain embodiments, when the release threshold adjustment devices apply a pre-bias or an initial load to the holding mechanisms, it is also conceivable that the release threshold value of a holding mechanism is reduced by reducing the pre-bias or the initial load. This allows simultaneous opening of all the latches, when a dropping operation is performed.

According to a further embodiment, the first passive holding device comprises an end switch for detecting successful opening of the first latch and generating an end switch signal containing the current status of the first latch. The end switch is configured to send the generated end switch signal to the controller.

The end switch may for example be a push-button sensor or other kind of suitable sensor that generates a signal when the passive holding device reaches a corresponding end position. However, the end switch may also be located directly at the first latch (or any additional latches), to detect if the latches have opened or not. Further, the end switch may also measure a corresponding position of the first passive holding device (and any additional passive holding devices) or the latches itself and communicate these positions to the controller. The controller can use the communicated information for error monitoring.

According to a further embodiment, the controller is configured to determine if the first latch has been successful released based on the end switch signal. The controller is configured to display a current status and/or a warning message for a user if opening of the first latch has not been successful.

The controller may also monitor if further latches, such as a second, third, fourth, etc. latch has opened or not. If at least one latch has not opened, the release operation has not been successful and an error message or status may be displayed to a user, e.g., using a display screen. The user can use this information to take appropriate measures, e.g., to abort the dropping operation or the take remedial measures. For example, the user may manually cut the parachute or open the faulty latches.

According to a further embodiment, the controller is configured to abort a release operation if opening of the first latch has not been successful.

The controller may for example trigger detonators to cut the parachute and thereby abort the dropping operation. Any other necessary measures may also automatically be taken by the controller, such as relatching the remaining latches in order to the secure the component.

According to a second aspect, and aircraft is provided. The aircraft comprises a fuselage having a rear hatch, a parachute system and the component hold and release arrangement described above.

The component hold and release arrangement may be designed according to any one of the embodiments described above. A component may be fixed to a floor of a compartment of the aircraft by the component hold and release arrangement or rather the latches of the arrangement. The rear hatch of the aircraft can be opened to drop a component if needed or desired. When the parachute system opens a parachute, this parachute pulls on the component, whereby a force is exerted onto the latch or latches of the holding mechanism(s). The component hold and release system then works according to the principles described above.

In summary, the description provides a component hold and release arrangement, in particular for an aircraft, that allows for fixing a component to the floor of a compartment. The arrangement can be used to release the component when in a drop zone and the release threshold of the holding mechanisms can be adjusted to environmental conditions easily and, more importantly, fast in order to ensure that all the latches open simultaneously. Further, certain security features may be used to abort a dropping operation if necessary.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: A schematic view of an exemplary component hold and release arrangement utilizing a disc spring torque limiter and active torque limiter.
- **Fig. 2**: A schematic view of an exemplary component hold and release arrangement utilizing a disc spring torque limiter and an actuator device.
- **Fig. 3**: A schematic view of an exemplary component hold and release arrangement utilizing a force limiter and an active torque limiter.
- **Fig. 4**: An aircraft having a component hold and release arrangement and a parachute system.

### DETAILLED DESCRIPTION

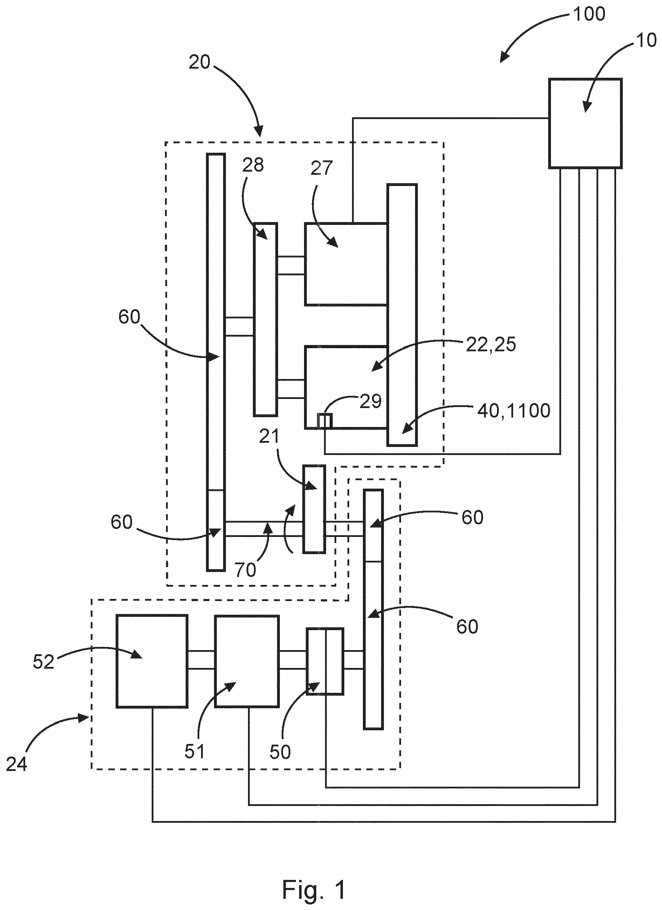

Fig. 1 shows a component hold and release arrangement 100. The arrangement 100 comprises a holding mechanism 20, a release mechanism 24 and a controller 10.

The holding mechanism comprises a passive holding device 22 and a release threshold adjustment device 27 which is an active torque limiter 27 in the depicted configuration. The passive holding device 22 and the active torque limiter 27 are joint by a summing gear 28, which is depicted as a ring gear. Both the active torque limiter 27 and the passive holding device 22 are fixed to a surrounding structure 40 on one end, which may, for example, be the fuselage 1100 of an aircraft (or rather a structural element of the fuselage 1100, such as a frame or a stringer or a floor panel inside the fuselage 1100). Therefore, the end connected to surrounding structure 40 is fixed in position and cannot move. On the opposite end, both the active torque limiter 27 and the passive holding device 22 are in contract with the summing gear 28. For example, the corresponding shafts may have a toothed structure which engages with the summing gear 28. The summing gear 28 is rotationally connected to a gear 60 which is connected to another gear 60 which in turn is connected to a rotational axis 70. The rotational axis 70 corresponds to the rotational axis of a latch 21, which may, e.g., be a claw or a hook or another element that allows to engage with a component and hold it in place by rotating inside a respective recess of the component. Although shown with two intermediate gears 60, any number of gears 60 or other suitable movement transfer element may be used and the single elements or gears 60 may be designed to provide a desired transmission or gear ratio.

The release mechanism 24 comprises a motor brake 52, a motor 51, a clutch 50 and a set of two gears 60 connecting the clutch 50 with the rotational axis 70 of the latch 21. When the clutch 50 is closed and the motor brake 52 opened, the motor 51 may be used to rotate the latch 21 inside a recess of a component. Afterwards, the motor 51 can be disengaged, the clutch 50 can be closed and the motor brake 52 can be closed. Since the release mechanism 24 is mechanically connected to the latch 21, the release mechanism 24 avoids accidental unlatching or opening of the latch 21, even if a force acting onto the latch 21 exceeds a release threshold mediated by the holding mechanism 20. The holding mechanism 20 can only work, if the clutch 50 is opened. It should be noted that the release mechanism 24 is optional and the functionality of the component hold and release mechanism 100 is also provided for without the release mechanism 24.

**In** the depicted configuration, the passive holding device 22 is a disc spring torque limiter 25, as describer further above. The force sensor 29 measures the preload force of the disc spring torque limiter 25 and communicates it to the controller 10. Since the latch 21 is mechanically coupled to the active torque limiter 27 and the passive holding device 22 via the gears 60 and the summing gear 28, a force acting onto the latch 21 is transmitted to the system of the active torque limiter 27 and the passive holding device 22, where the transmitted force causes a torque that is acting onto the active torque limiter 27 and the passive holding device 22 when the clutch 50 is opened. Hence, when the force acting onto the latch 21 reaches a value that causes a torque at or above the torque threshold of the combination of the active torque limiter 27 and the passive holding device 22, these torque limiters become freewheeling and allow the latch 21 to rotate into the open position. The corresponding force value acting onto the latch, where this condition is met is referred to herein as the release threshold.

For example, if the component hold and release arrangement 100 is used for a parachute dropping operation of a component, the parachute pulls on the component with a dedicated force. This force is acting onto the latch 21 (or distributed over different latches 21, if more than one holding mechanism 20 is used). Therefore, the release threshold needs to be lower than the force resulting from the parachute (or any other extraction force) in order to allow the component to leave the component when the parachute is opened. The torque threshold of the passive holding device 22 (and therefore the release threshold) may be set beforehand, e.g., by adjusting and adjustment screw on the passive holding device 22. However, because of changing environmental conditions (temperature, pressure, etc.) when the aircraft reaches the dropping zone, the setting may change, since the passive holding device 22 works mechanically.

The controller 10 is connected to the active torque limiter 27, to a force sensor 29 of the passive holding device 22 as well as to the clutch 50, to the motor 51 and to the motor brake 52. The controller may receive the current torque threshold of the passive holding device 22 from the force sensor 29. Using the received force value, the controller 10 may command an adjustment torque to the active torque limiter 27 in order to account for the changes of the overall release threshold described above. When the dropping zone is reached and the dropping operation is imminent, a parachute is opened or another extraction force is applied to the component and afterward the clutch 50 is opened. The extraction force then acts onto the latch 21. When this force reaches the release threshold, the holding mechanism 20 unlatches as described above and the component can leave the compartment.

If more than one holding mechanism 20 (e.g., four holding mechanisms 20) are used, the controller 10 can use the force values from the single force sensors 29 in order to command adjustment values to the active torque limiters 27, so that the release thresholds of all the latches 21 are aligned with each other and all the latches 21 open simultaneously.

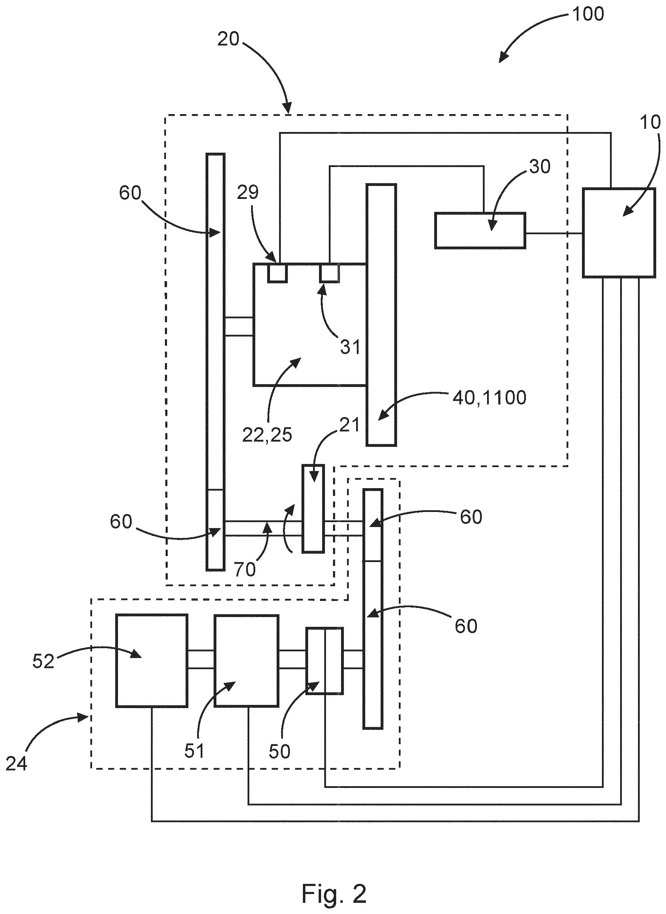

Fig. 2 shows a component hold and release arrangement 100 similar to the one shown in Fig. 1. However, in Fig. 2, there is no active torque limiter 27. Instead, the release threshold adjustment device is an actuator device 30 which is connected to an adjustment element 31 of the passive holding device 22 and in communication with the controller 10. In this configuration, there is also no summing gear 28 but the passive holding device 22 is directly connected to the latch 21 via the gears 60. Instead of commanding an adjustment value to the active torque limiter 27 in Fig. 1, in this configuration such an adjustment value is commanded to the actuator device 30. The actuator device 30 in turn actuates the adjustment element 31, which may for example be an adjustment screw for setting the preset force of the passive holding device 22, and thereby adjusts the torque threshold of the passive holding device 22. Therefore, the release threshold may be adjusted by directly adjusting the torque threshold of the passive holding device 22.

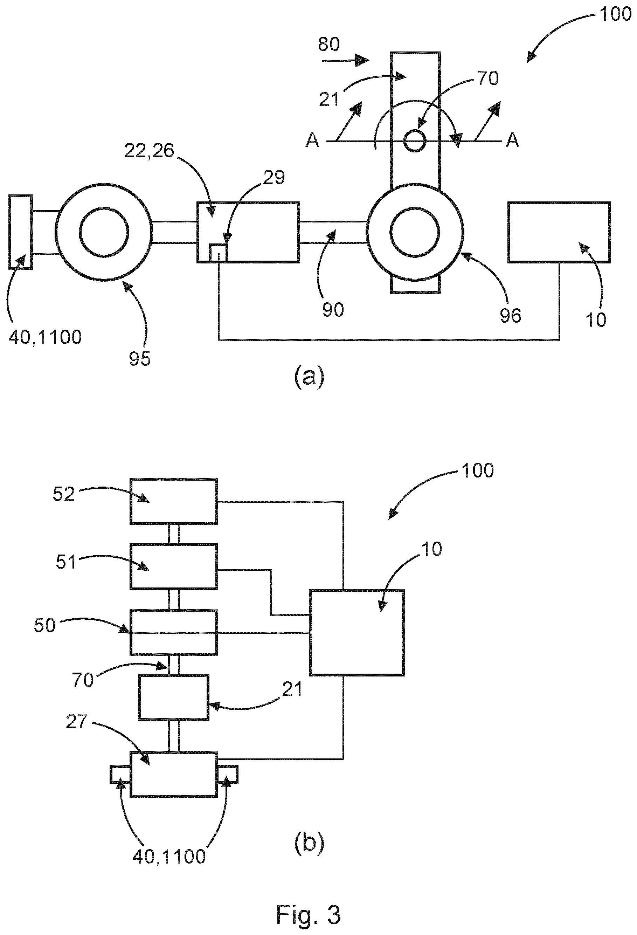

Fig. 3 (a) and (b) show another component hold and release arrangement 100. However, in Fig. 3, the passive holding device 22 is a force limiter 26. Such a force limiter may work in a similar manner as a passive torque limiter, such as a disc spring torque limiter. In particular, the force limiter 26 may be a disc spring force limiter. As shown in Fig. 3 (a), on one of its ends, the force limiter 26 is connected to the surrounding structure 40 (such as a fuselage 1100 of an aircraft) via a first articulation point 95. On the other end of the force limiter 26, a sliding shaft 90 is connected to the latch 21 via a second articulation point 96. The second articulation point 96 is spaced apart from the rotational axis 70 of the latch 21 opposite to the engaging portion of the latch 21. When a latch force 80 acts onto the latch 21, a torque is created in the rotational axis 70, which causes a linear force into the sliding shaft 90 via the second articulation point 96. Thereby, the sliding shaft 90 is pushed into the force limiter 26. when a force threshold of the force limiter 26 is reached, the force limiter 26 releases and allows linear movement of the sliding shaft 90 into the force limiter 26.

Fig. 3 (b) shows a sectional view along cut line A-A in Fig. 3 (a). In other words, Fig. 3 (b) shows the rotational axis 70 (which runs into the drawing plane) of Fig. 3 (a) when viewed from above. As can be seen, the motor brake 52, the motor 51 and the clutch 50 are located directly on the rotational axis 70, without the gears 60 of the configurations in figs. 1 and 2. As will be readily apparent, the function of these elements is the same as in figs. 1 and 2. Also directly placed on the rotational axis 70 is an release threshold adjustment device 27 which is an active torque limiter 27, and which may be configured similarly to Fig. 1. The active torque limiter 27 again is fixed to the surrounding structure 40 (which again may be the fuselage 1100 of an aircraft).

In Fig. 3, the controller 10 may again receive force values indicating the preload force of the force limiter 26 from a force sensor 29 of the force limiter 26. In response to the received force values, the controller can adjust the overall release threshold by commanding a corresponding adjustment value to the active torque limiter 27 (shown in Fig. 3 (b)), just as in the configuration of Fig. 1.

It will be readily apparent that, with the arrangement 100 of Fig. 3, a dropping operation may be performed similarly to the procedure described with reference to Fig. 1.

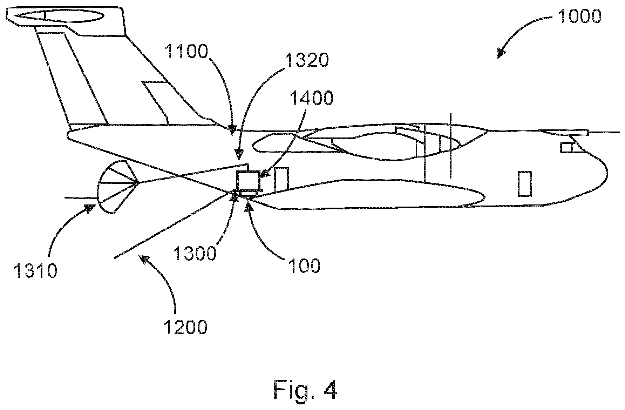

Fig. 4 shows an aircraft 1000. The aircraft comprises a fuselage 1100 with a rear hatch 1200. One of the component hold and release arrangements 100 as described above is arranged below a floor panel 1300. On the floor panel 1300 a component 1400 is placed and fixedly connected to the floor panel 1300 by the latches 21 of the component hold and release arrangement 100. A parachute 1310 is connected to the component 1400 and is opened. The situation shown in Fig. 4 is immediately before dropping the component 1400. The parachute 1310 pulls on the component 1400 with a dedicated force. The overall release threshold of the component hold and release arrangement 100 has been adjusted such that it is lower than the force the parachute 1310 exerts onto the component 1400 and therefore onto the latches 21. Once the clutch 50, as for example shown in Figs. 1 to 3, is opened, therefore the component hold and release arrangement will unlatch and the parachute 1310 will pull the component out of the compartment 1320.

In particular, the component hold and release arrangement 100 as described herein ensures that all latches open simultaneously and the component 1400 leaves the aircraft 1000 in an even manner, without any spin or other undesired moment of movement.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 10: controller
- 20: holding mechanisms
- 21: latches
- 22: passive holding devices
- 24: release mechanisms
- 25: disc spring torque limiters
- 26: force limiters
- 27: release threshold adjustment devices, active torque limiters
- 28: summing gear
- 29: force sensor
- 30: release threshold adjustment devices, actuator device
- 31: adjustment element
- 40: surrounding structure
- 50: clutch
- 51: motor
- 52: motor brake
- 60: gears
- 70: rotational axis
- 80: latch force
- 90: sliding shaft
- 95: first articulation point
- 96: second articulation point
- 100: component hold and release arrangement

- 1000: aircraft
- 1100: fuselage
- 1200: rear hatch
- 1300: floor panel
- 1310: parachute
- 1320: compartment
- 1400: component

## Claims

1. A component hold and release arrangement (100) for an aircraft (1000), comprising:
a controller (10);
a first holding mechanism (20), comprising:
a first latch (21);
a first passive holding device (22); and
a release threshold adjustment device (27, 30);
wherein the first passive holding device (22) is connected to the first latch (21) and configured to prevent movement of the first latch (21) when a force exerted onto the first latch (21) is smaller than a first release threshold;
wherein the first passive holding device (22) is configured to release the first latch (21) when the force exerted onto the first latch (21) reaches the first release threshold;
wherein the release threshold adjustment device (27, 30) is functionally coupled to the first passive holding device (22) and adapted to adjust the first release threshold;
wherein the controller (10) is in communication with the release threshold adjustment device (27, 30) and configured to communicate a corresponding adjustment value to the release threshold adjustment device (27, 30) so as to adjust the first release threshold; and
**characterized in that**
the first passive holding device (22) is one of the following:
a disc spring torque limiter (25) configured to allow movement of a rotating shaft when a release torque is reached; or
a force limiter (26) configured to prevent linear movement of a sliding shaft (90) when the force limiter (26) is in a secured state and to allow linear movement of the sliding shaft (90) when a release force is reached.

2. The component hold and release arrangement (100) of claim 1, further comprising a second holding mechanism (20) comprising:
a second latch (21); and
a second passive holding device (22);
wherein the second passive holding device (22) is connected to the second latch (21) and configured to prevent movement of the second latch (21) when a force exerted onto the second latch (21) is smaller than a second release threshold;
wherein the second passive holding device (22) is configured to release the second latch (21) when the force exerted onto the second latch (21) reaches the second release threshold; and
wherein the adjustment value communicated to the release threshold adjustment device (27, 30) effects an adjustment of the first release threshold so as to align the first release threshold and the second release threshold with each other.

3. The component hold and release arrangement (100) of claim 1 or 2, wherein the first holding mechanisms (20) further comprises a release mechanism (24);
wherein the release mechanism (24) prevents movement of the first latch (21) when the release mechanism (24) is in a secured state; and
wherein the release mechanism (24) allows movement of the first latch (21) when the release mechanism (24) is in an unsecured state.

4. The component hold and release arrangement (100) of any of the preceding claims, wherein the release threshold adjustment device (27) is an active torque limiter (27) configured to provide an additional torque component for the first passive holding device (22).

5. The component hold and release arrangement (100) of claim 4, wherein the active torque limiter (27) comprises an internal coil for adjusting the additional torque component by adjusting the current through the coil.

6. The component hold and release arrangement (100) of claim 4, wherein the active torque limiter (27) comprises an internal gas cylinder for adjusting the additional torque component pneumatically.

7. The component hold and release arrangement (100) of any one of claims 4 to 6, wherein the active torque limiter (27) and the first passive holding device (22) are connected with each other by a summing gear (28), such that the active torque limiter (27) adds the additional torque component to the passive holding device (22) via the summing gear (28) so as to adjust the first release threshold.

8. The component hold and release arrangement (100) of any one of claims 1 to 3, wherein the release threshold adjustment device (30) is an actuator device (30) configured to adjust the first release threshold by actuating an adjustment element (31) of the first passive holding device (22).

9. The component hold and release arrangement (100) of any of the preceding claims, wherein the first passive holding device (22) comprises a force sensor (29) configured to measure a preload force of the passive holding device (22) and communicate the determined force value to the controller (10).

10. The component hold and release arrangement (100) of any of the preceding claims, wherein the first passive holding device (22) comprises an end switch for detecting successful opening of the first latch (21) and generating an end switch signal containing the current status of the first latch (21);
wherein the end switch is configured to send the generated end switch signal to the controller (10).

11. The component hold and release arrangement (100) of claim 10, wherein the controller (10) is configured to determine if the first latch (21) has been successful released based on the end switch signal; and
wherein the controller (10) is configured to display a current status and/or a warning message for a user if opening of the first latch (21) has not been successful.

12. The component hold and release arrangement (100) of claim 11, wherein the controller (10) is configured to abort a release operation if opening of the first latch (21) has not been successful.

13. Aircraft (1000), comprising:
a fuselage (1100) having a rear hatch (1200);
a parachute system (1300); and
the component hold and release arrangement (100) of any of claims 1 to 12.

## Patentansprüche

1. Eine Halte- und Freigabeanordnung (100) für ein Flugzeug (1000), umfassend:
eine Steuerung (10);
einen ersten Haltemechanismus (20), umfassend:
eine erste Verriegelung (21);
eine erste passive Haltevorrichtung (22); und
eine Freigabeschwellen-Einstellvorrichtung (27, 30);
wobei die erste passive Haltevorrichtung (22) mit der ersten Verriegelung (21) verbunden und konfiguriert ist, um eine Bewegung der ersten Verriegelung (21) zu verhindern, wenn eine auf die erste Verriegelung (21) ausgeübte Kraft kleiner als eine erste Auslöseschwelle ist;
wobei die erste passive Haltevorrichtung (22) konfiguriert ist, um die erste Verriegelung (21) freizugeben, wenn die auf die erste Verriegelung (21) ausgeübte Kraft die erste Auslöseschwelle erreicht;
wobei die Freigabeschwellen-Einstellvorrichtung (27, 30) funktionsmäßig mit der ersten passiven Haltevorrichtung (22) gekoppelt und dazu ausgelegt ist, die erste Freigabeschwelle einzustellen;
wobei die Steuerung (10) mit der Freigabeschwellen-Einstellvorrichtung (27, 30) in Verbindung steht und konfiguriert ist, um einen entsprechenden Einstellwert an die Freigabeschwellen-Einstellvorrichtung (27, 30) zu übermitteln, um die ersten Freigabeschwelle einzustellen; und
**dadurch gekennzeichnet, dass** die erste passive Haltevorrichtung (22) eine der Folgenden ist:
ein Tellerfeder-Drehmomentbegrenzer (25), der konfiguriert ist, um eine Bewegung einer rotierenden Welle zuzulassen, wenn ein Auslösemoment erreicht ist; oder
ein Kraftbegrenzer (26), der konfiguriert ist, um eine lineare Bewegung einer Gleitwelle (90) zu verhindern, wenn sich der Kraftbegrenzer (26) in einem gesicherten Zustand befindet, und eine lineare Bewegung der Gleitwelle (90) zulässt, wenn eine Auslösekraft erreicht ist.

2. Die Komponentenhalte- und -freigabeanordnung (100) nach Anspruch 1, die ferner einen zweiten Haltemechanismus (20) umfasst, umfassend:
eine zweite Verriegelung (21); und
eine zweite passive Haltevorrichtung (22);
wobei die zweite passive Haltevorrichtung (22) mit der zweiten Verriegelung (21) verbunden und konfiguriert ist, um eine Bewegung der zweiten Verriegelung (21) zu verhindern, wenn eine auf die zweite Verriegelung (21) ausgeübte Kraft kleiner als eine zweite Auslöseschwellen ist;
wobei die zweite passive Haltevorrichtung (22) konfiguriert ist, um die zweite Verriegelung (21) freizugeben, wenn die auf die zweite Verriegelung (21) ausgeübte Kraft den zweiten Freigabeschwellen erreicht; und
wobei der an die Freigabeschwellen-Einstellvorrichtung (27, 30) übermittelte Einstellwert eine Einstellung der ersten Freigabeschwelle bewirkt, um die erste Freigabeschwelle und die zweite Freigabeschwelle aufeinander abzustimmen.

3. Die Komponentenhalte- und -freigabeanordnung (100) nach Anspruch 1 oder 2, wobei die ersten Haltemechanismen (20) ferner einen Freigabemechanismus (24) umfassen;
wobei der Freigabemechanismus (24) eine Bewegung der ersten Verriegelung (21) verhindert, wenn sich der Freigabemechanismus (24) in einem gesicherten Zustand befindet; und
wobei der Freigabemechanismus (24) eine Bewegung der ersten Verriegelung (21) zulässt, wenn sich der Freigabemechanismus (24) in einem ungesicherten Zustand befindet.

4. Die Komponentenhalte- und -freigabeanordnung (100) nach einem der vorstehenden Ansprüche, wobei die Freigabeschwellen-Einstellvorrichtung (27) ein aktiver Drehmomentbegrenzer (27) ist, der konfiguriert ist, um eine zusätzliche Drehmomentkomponente für die erste passive Haltevorrichtung (22) bereitzustellen.

5. Die Komponentenhalte- und -freigabeanordnung (100) nach Anspruch 4, wobei der aktive Drehmomentbegrenzer (27) eine interne Spule zum Einstellen der zusätzlichen Drehmomentkomponente durch Einstellen des durch die Spule fließenden Stroms umfasst.

6. Die Komponentenhalte- und -freigabeanordnung (100) nach Anspruch 4, wobei der aktive Drehmomentbegrenzer (27) einen internen Gaszylinder zum pneumatischen Einstellen der zusätzlichen Drehmomentkomponente umfasst.

7. Die Komponentenhalte- und -freigabeanordnung (100) nach einem der Ansprüche 4 bis 6, wobei der aktive Drehmomentbegrenzer (27) und die erste passive Haltevorrichtung (22) durch ein Summiergetriebe (28) miteinander verbunden sind, so dass der aktive Drehmomentbegrenzer (27) über das Summiergetriebe die zusätzliche Drehmomentkomponente zur passiven Haltevorrichtung (22) hinzufügt, um die erste Auslöseschwelle einzustellen.

8. Die Komponentenhalte- und -freigabeanordnung (100) nach einem der Ansprüche 1 bis 3, wobei die Freigabeschwelleneinstellvorrichtung (30) eine Betätigungsvorrichtung (30) ist, die konfiguriert ist, um die erste Freigabeschwelle durch Betätigen eines Einstellelements (31) der ersten passiven Haltevorrichtung (22) einzustellen.

9. Die Komponentenhalte- und -freigabeanordnung (100) nach einem der vorstehenden Ansprüche, wobei die erste passive Haltevorrichtung (22) einen Kraftsensor (29) umfasst, der konfiguriert ist, um eine Vorspannkraft der passiven Haltevorrichtung (22) zu messen und den ermittelten Kraftwert an die Steuerung (10) übermittelt.

10. Die Komponentenhalte- und -freigabeanordnung (100) nach einem der vorstehenden Ansprüche, wobei die erste passive Haltevorrichtung (22) einen Endschalter zum Erfassen des erfolgreichen Öffnens der ersten Verriegelung (21) und zum Erzeugen eines
Endschaltersignals umfasst, das den aktuellen Status der ersten Verriegelung (21) umfasst;
wobei der Endschalter konfiguriert ist, um das erzeugte Endschaltersignal an die Steuerung (10) zu senden.

11. Die Komponentenhalte- und -freigabeanordnung (100) nach Anspruch 10, wobei die
Steuerung (10) konfiguriert ist, um anhand des Endschaltersignals festzustellen, ob die erste Verriegelung (21) erfolgreich freigegeben wurde; und
wobei die Steuerung (10) konfiguriert ist, um einen aktuellen Status und/oder eine Warnmeldung für einen Benutzer anzuzeigen, wenn das Öffnen der ersten Verriegelung (21) nicht erfolgreich war.

12. Die Komponentenhalte- und -freigabeanordnung (100) nach Anspruch 11, wobei die Steuerung (10) konfiguriert ist, um einen Freigabevorgang abzubrechen, wenn das Öffnen der ersten Verriegelung (21) nicht erfolgreich war.

13. Flugzeug (1000), umfassend:
einen Rumpf (1100) mit einer hinteren Luke (1200);
ein Fallschirmsystem (1300); und
die Komponentenhalte- und -freigabeanordnung (100) nach einem der Ansprüche 1 bis 12.

## Revendications

1. Arrangement de maintien et de libération de composant (100) pour un aéronef (1000), comprenant:
un contrôleur (10);
un premier mécanisme de maintien (20), comprenant:
un premier loquet (21);
un premier dispositif de maintien passif (22); et
un dispositif de réglage du seuil de libération (27, 30);
dans lequel le premier dispositif de maintien passif (22) est relié au premier loquet (21) et configuré pour empêcher le mouvement du premier loquet (21) lorsqu'une force exercée sur le premier loquet (21) est inférieure à un premier seuil de libération;
dans lequel le premier dispositif de maintien passif (22) est configuré pour libérer le premier loquet (21) lorsque la force exercée sur le premier loquet (21) atteint le premier seuil de libération;
dans lequel le dispositif de réglage du seuil de libération (27, 30) est couplé de manière fonctionnelle au premier dispositif de maintien passif (22) et adapté pour régler le premier seuil de libération;
dans lequel le contrôleur (10) est en communication avec le dispositif de réglage du seuil de libération (27, 30) et configuré pour communiquer une valeur de réglage correspondante au dispositif de réglage du seuil de libération (27, 30) afin de régler le premier seuil de libération; et
**caractérisé en ce que** le premier dispositif de maintien passif (22) est l'un des suivants:
un limiteur de couple à ressort à disque (25) configuré pour permettre le mouvement d'un arbre rotatif lorsqu'un couple de libération est atteint; ou
un limiteur de force (26) configuré pour empêcher le mouvement linéaire d'un arbre coulissant (90) lorsque le limiteur de force (26) est dans un état sécurisé et pour permettre le mouvement linéaire de l'arbre coulissant (90) lorsqu'une force de libération est atteinte.

2. Arrangement de maintien et de libération de composants (100) selon la revendication 1, comprenant en outre un deuxième mécanisme de maintien (20) comprenant:
un deuxième loquet (21); et
un deuxième dispositif de maintien passif (22);
dans lequel le deuxième dispositif de maintien passif (22) est relié au deuxième loquet (21) et configuré pour empêcher le mouvement du deuxième loquet (21) lorsqu'une force exercée sur le deuxième loquet (21) est inférieure à un deuxième seuil de libération;
dans lequel le deuxième dispositif de maintien passif (22) est configuré pour libérer le deuxième loquet (21) lorsque la force exercée sur le deuxième loquet (21) atteint le deuxième seuil de libération; et
dans lequel la valeur de réglage communiquée au dispositif de réglage du seuil de libération (27, 30) effectue un réglage du premier seuil de libération de manière à aligner le premier seuil de libération et le deuxième seuil de libération l'un par rapport à l'autre.

3. Arrangement de maintien et de libération de composants (100) selon la revendication 1 ou 2, dans lequel les premiers mécanismes de maintien (20) comprennent en outre un mécanisme de libération (24);
dans lequel le mécanisme de libération (24) empêche le mouvement du premier loquet (21) lorsque le mécanisme de libération (24) est dans un état sécurisé; et
dans lequel le mécanisme de libération (24) permet le mouvement du premier loquet (21) lorsque le mécanisme de libération (24) est dans un état non sécurisé.

4. Arrangement de maintien et de libération de composants (100) selon l'une quelconque des revendications précédentes, dans lequel le dispositif de réglage du seuil de libération (27) est un limiteur de couple actif (27) configuré pour fournir un composant de couple supplémentaire au premier dispositif de maintien passif (22).

5. Arrangement de maintien et de libération de composants (100) selon la revendication 4, dans lequel le limiteur de couple actif (27) comprend une bobine interne de régler la composante de couple supplémentaire en réglant le courant traversant la bobine.

6. Arrangement de maintien et de libération de composants (100) selon la revendication 4, dans lequel le limiteur de couple actif (27) comprend un cylindre à gaz interne pour régler pneumatiquement la composante de couple supplémentaire.

7. Arrangement de maintien et de libération de composant (100) selon l'une quelconque des revendications 4 à 6, dans lequel le limiteur de couple actif (27) et le premier dispositif de maintien passif (22) sont reliés l'un à l'autre par un engrenage de sommation (28), de telle sorte que le limiteur de couple actif (27) ajoute la composante de couple supplémentaire au dispositif de maintien passif (22) via l'engrenage de sommation (28) afin de régler le premier seuil de libération.

8. Arrangement de maintien et de libération de composant (100) selon l'une quelconque des revendications 1 à 3, dans lequel le dispositif de réglage du seuil de libération (30) est un dispositif d'actionnement (30) configuré pour régler le premier seuil de libération en actionnant un élément de réglage (31) du premier dispositif de maintien passif (22).

9. Arrangement de maintien et de libération de composants (100) selon l'une quelconque des revendications précédentes, dans lequel le premier dispositif de maintien passif (22) comprend un capteur de force (29) configuré pour mesurer une force de précharge du dispositif de maintien passif (22) et communiquer la valeur de force déterminée au contrôleur (10).

10. Arrangement de maintien et de libération de composants (100) selon l'une quelconque des revendications précédentes, dans lequel le premier dispositif de maintien passif (22) comprend un interrupteur de fin de course pour détecter l'ouverture réussie du premier loquet (21) et générer un signal d'interrupteur de fin de course contenant l'état actuel du premier loquet (21);
dans lequel l'interrupteur de fin de course est configuré pour envoyer le signal d'interrupteur de fin de course généré au contrôleur (10).

11. Arrangement de maintien et de libération de composants (100) selon la revendication 10, dans lequel le contrôleur (10) est configuré pour déterminer si le premier loquet (21) a été libéré avec succès sur la base du signal d'interrupteur de fin de course; et
dans lequel le contrôleur (10) est configuré pour afficher un état actuel et/ou un message d'avertissement à l'intention d'un utilisateur si l'ouverture du premier loquet (21) n'a pas abouti.

12. Arrangement de maintien et de libération de composants (100) selon la revendication 11, dans lequel le contrôleur (10) est configuré pour interrompre une opération de libération si l'ouverture du premier loquet (21) n'a pas abouti.

13. Aéronef (1000), comprenant:
un fuselage (1100) comportant une trappe arrière (1200);
un système de parachute (1300); et
l'arrangement de maintien et de libération de composants (100) de l'une quelconque des revendications 1 à 12.
